# FASCICULE DE BREVET EUROPEEN

(11) **EP 2 352 404 B1**
(45) Date de publication et mention de la délivrance du brevet: **08.01.2014**
(21) Numéro de dépôt: 09801482.2
(22) Date de dépôt: 02.12.2009
(51) Int. Cl.: A47J 19/02

(54) **APPAREIL ELECTROMENAGER DE PREPARATION DE JUS A RENDEMENT DE PRESSAGE AMELIORE**
ELEKTRISCHES HAUSHALTSGERÄT ZUR ZUBEREITUNG VON SAFT MIT VERBESSERTER PRESSAUSBEUTE
ELECTRICAL HOME APPLIANCE FOR PREPARING JUICE, WITH IMPROVED PRESSING YIELD

(30) Priorité: 04.12.2008 FR 0858267
(43) Date de publication de la demande: 10.08.2011
(73) Titulaire: SEB S.A., 69130 Ecully (FR)
(72) Inventeur: PERRIER, Matthieu, F-65310 Laloubere (FR)
(74) Mandataire: Blanchard, Eugène Gilles
(86) Numéro de dépôt international: PCT/FR2009/052383
(87) Numéro de publication internationale: WO 2010/063956

(56) Documents cités:
- WO-A-2007/148872
- DE-A1- 4 446 244

## Description

La présente invention concerne le domaine de la préparation de jus frais à partir d'aliments tels que des fruits et/ou des légumes.

Plus particulièrement, l'invention concerne un appareil électroménager dédié spécifiquement à la préparation de tels jus et qui permette un traitement amélioré des fruits et/ou des légumes assurant une meilleure conservation de leurs qualités organoleptiques tout en procurant un meilleur rendement d'extraction des jus.

Dans le domaine susvisé, on connaît déjà un grand nombre d'appareils électroménagers dédiés, spécifiquement ou non, à la préparation de jus de fruits ou de légumes.

Les plus simples d'entre eux consistent en des presse-agrumes motorisés dont l'ogive de pressage est solidaire de l'axe d'un moteur électrique dont la rotation est actionnée lorsque l'utilisateur appuie manuellement l'aliment à presser sur l'ogive de pressage. Ces presse-agrumes présentent l'inconvénient de nécessiter l'action manuelle de l'utilisateur sur l'appareil, directement au niveau de l'ogive de pressage, ce qui procure des risques de contact entre l'utilisateur et la partie mobile de l'appareil. De plus, leur emploi s'avère difficile pour l'utilisateur dans la mesure où il nécessite une pression continue de sa part sur l'ogive de pressage par l'intermédiaire de l'aliment à presser. Malgré cette pression continue de l'utilisateur, les pulpes et chairs de fruits ou de légumes traités ne sont pas entièrement pressées et une grande part des jus reste prisonnière de ces pulpes, qui sont la plupart du temps jetées par l'utilisateur.

On connaît également d'autres appareils électroménagers de préparation de jus tels que des centrifugeuses, qui ne nécessitent pas d'action manuelle de l'utilisateur sur les aliments à presser pour réaliser l'opération d'extraction des jus. Ces appareils sont performants dans leur capacité à extraire le jus des produits traités rapidement. Cependant, la qualité des jus produits est elle réduite en raison du contact important des jus avec l'air au sein de l'enceinte de centrifugation, qui favorise une oxydation très rapide des jus et donc une perte importante des qualités organoleptiques de ceux-ci.

Par ailleurs, on sait que même avec les meilleures centrifugeuses, le rendement maximal en jus n'est que de l'ordre de 60%, et donc plus d'un tiers de l'eau, donc du jus des aliments, n'est pas extrait par les centrifugeuses.

On connaît enfin un dernier type d'appareils comportant une vis de pressage et permettant une extraction séparée des jus et des résidus pressés des aliments. Des exemples particuliers de tels appareils sont notamment décrits dans les documents WO2007/148872 US 5,906,154 et WO 2007/002087.

Ces derniers appareils sont satisfaisants et performants pour ce qui est du pressage des aliments et de la qualité des jus obtenus. Toutefois, ils ne permettent au plus qu'une extraction de l'ordre de 70% des jus des aliments pressés.

La présente invention a pour objectif de proposer un appareil électroménager qui pallie les inconvénients des appareils connus à ce jour et qui procure un rendement de jus grandement amélioré.

A cet effet, la présente invention propose un appareil électroménager de préparation de jus par pressage d'aliments, notamment de végétaux tels que des fruits ou des légumes, comportant :
- un boîtier renfermant un moteur électrique d'entraînement,
- une enceinte de travail adaptée pour être installée sur le boîtier et comportant une ouverture d'admission d'aliments à l'intérieur de l'enceinte de travail et une sortie d'évacuation pour le jus,
- une vis de pressage montée à l'intérieur de l'enceinte de travail et accouplée mécaniquement à un arbre d'entraînement du moteur électrique, et
- un moyen de filtration, divisant l'enceinte de travail en un premier compartiment logeant la vis de pressage et en un second compartiment communiquant avec la sortie d'évacuation.

Cet appareil se caractérise principalement par le fait qu'il comporte en outre des moyens d'évacuation et de recirculation des résidus de pressage depuis une partie inférieure du premier compartiment de l'enceinte de travail vers une partie supérieure dudit premier compartiment.

L'appareil de l'invention présente de façon avantageuse des moyens de recirculation des résidus de pressage depuis une partie inférieure de l'enceinte de pressage vers une partie supérieure de cette enceinte. Ainsi, les résidus de pressage sont pressés plusieurs fois successivement et non une seule et unique fois comme dans les appareils de la technique antérieure. Ce pressage multiple des résidus permet une extraction grandement accrue des jus qu'ils contiennent, pouvant aller jusqu'à 90% d'extraction sur certains fruits et légumes.

Selon une première caractéristique préférée de l'invention, le moyen de filtration est monté coaxialement à la vis de pressage à l'intérieur de l'enceinte de travail.

Selon une autre caractéristique préférée de l'invention, les moyens d'évacuation et de recirculation des résidus de pressage comportent un canal de recirculation montante des résidus depuis un orifice d'évacuation formé dans la partie inférieure du premier compartiment vers un orifice de réintroduction formé au niveau de la partie supérieure du premier compartiment. De préférence, l'orifice d'évacuation est formé dans le fond du premier compartiment et l'orifice de réintroduction est localisé sensiblement au niveau de l'extrémité supérieure de la vis de pressage.

Selon des variantes de réalisation de l'invention :
- le canal de recirculation des résidus et les orifices d'évacuation et de réintroduction sont formés solidaires du moyen de filtration ;
- le canal de recirculation des résidus de pressage est formé dans le second compartiment dans l'enceinte de travail ;
- le canal de recirculation des résidus de pressage est formé sur la paroi externe de l'enceinte de travail ;
- le canal de recirculation des résidus de pressage présente une forme droite allongée selon une droite parallèle à une génératrice du moyen de filtration et/ou de l'enceinte de travail ;
- le canal de recirculation des résidus de pressage présente une forme sensiblement hélicoïdale.

Par ailleurs, selon une autre caractéristique avantageuse de l'invention, le canal de recirculation des résidus de pressage présente une paroi filtrante communiquant avec le second compartiment.

Toujours selon l'invention, la section du canal de recirculation des résidus de pressage est constante entre ledit orifice d'évacuation et ledit orifice de réintroduction. On évite ainsi les phénomènes de bourrage des résidus dans le canal de recirculation, tout en permettant un débit stable de résidus entre le fond de l'enceinte de travail et son ouverture d'admission.

Conformément à une autre caractéristique préférée de l'appareil de l'invention, l'orifice de réintroduction des résidus de pressage est situé en partie haute du moyen de filtration et sous l'ouverture d'admission de l'enceinte de travail. Ce positionnement particulier de l'orifice de réintroduction facilite l'entrainement par des aliments frais introduits dans l'ouverture d'admission des résidus d'aliments déjà pressés, procurant ainsi une meilleure homogénéisation des pulpes et chairs traitées pour favoriser toujours plus d'extraction.

Enfin, selon une autre caractéristique, la sortie d'évacuation du jus comporte un robinet de distribution du jus, le robinet de distribution comporte un moyen anti-goutte.

Diverses autres caractéristiques ressortent de la description faite ci-dessous en référence aux dessins annexés qui montrent, à titre d'exemples non limitatifs, des formes de réalisation de l'objet de l'invention.

Sur les figures :
- la **figure 1** représente schématiquement et partiellement en coupe l'appareil électroménager de la présente invention dans un mode préféré de réalisation ;
- la **figure 2** représente en détail et en coupe partielle le tambour de filtration de l'appareil représenté sur la **figure 1****,**
- la **figure 3** représente en détail et en coupe partielle une variante de réalisation du tambour de filtration de l'appareil représenté sur la figure 1.

L'invention propose un nouvel appareil électroménager pour la préparation de jus à partir d'aliments tels que, notamment, des fruits et/ou des légumes.

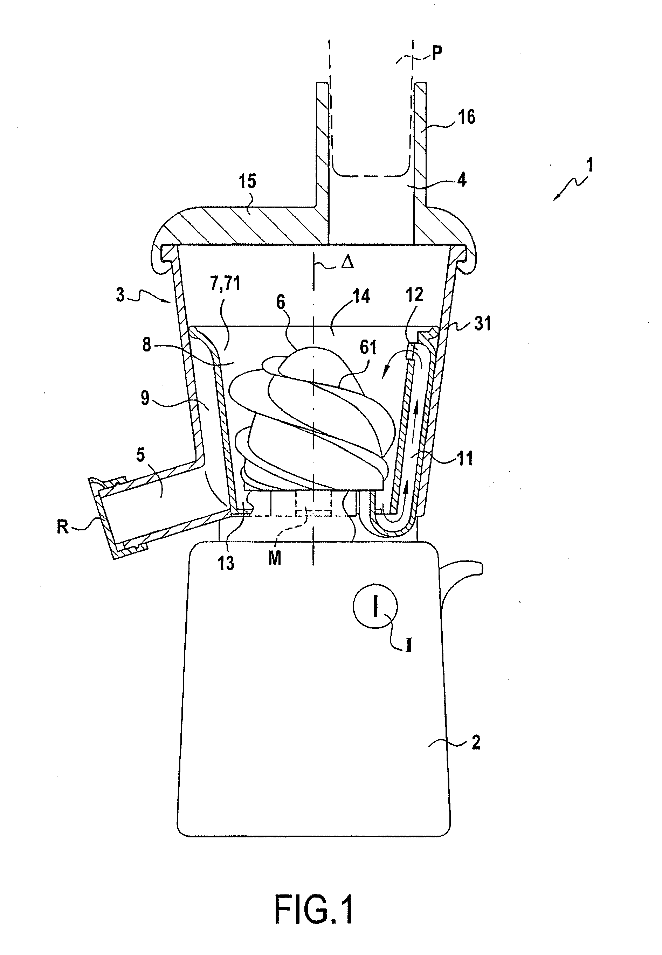

Comme représenté sur la **figure 1****,** cet appareil électroménager **1** comporte un boîtier **2** sur lequel peut être assemblée une enceinte de travail **3.**

Le boîtier **2** renferme, de façon connue en soi, un moteur électrique d'entraînement ainsi qu'une électronique de commande et pilotage de ce moteur. L'axe d'entrainement **M** du moteur, dirigé selon un axe vertical Δ, s'étend partiellement en saillie à la surface d'une platine de fixation formée sur le boîtier **2** pour recevoir et fixer l'enceinte de travail **3.**

L'enceinte de travail **3** est constituée d'un récipient **31** tel qu'un bol ouvert en sa partie supérieure ainsi que de préférence d'un couvercle **15** apte à être fixé sur un bord supérieur dudit récipient. Cette enceinte de travail **3** comporte une ouverture d'admission d'aliments **4,** ainsi qu'une sortie d'évacuation **5** pour le jus, située avantageusement à la base du récipient **31** pour permettre un écoulement par gravité des jus extraits à l'intérieur de l'enceinte de travail **3.**

De façon avantageuse, comme représenté sur la **figure 1****,** la sortie d'évacuation **5** comporte un robinet **R** de service équipé de préférence d'un dispositif anti-goutte afin de faciliter le service et la récupération des jus dans les meilleures conditions d'hygiène.

Dans l'exemple de la **figure 1****,** l'ouverture d'admission d'aliments **4** est délimitée par une goulotte d'admission **16** réalisée sur le couvercle **15** et dans laquelle peut être inséré un poussoir **P.** De façon avantageuse, la section transversale de la goulotte peut être choisie pour permettre le passage d'aliments entiers tels que notamment des pommes.

A l'intérieur de l'enceinte de travail **3** l'appareil **1** de l'invention comporte une vis de pressage **6** accouplée en rotation selon l'axe vertical Δ au fond de l'enceinte de travail **3** avec l'arbre d'entraînement **M** du moteur électrique renfermé dans le boîtier **2** de l'appareil.

Cet accouplement peut être réalisé notamment par l'intermédiaire d'une pièce rotative (non représentée) fixée de façon étanche au fond de l'enceinte de travail **3** et présentant une partie femelle d'accouplement avec l'arbre **M** d'entraînement du moteur électrique sur la face externe du fond de l'enceinte de travail **3** et une partie mâle d'accouplement avec la vis de pressage **6** sur la face interne de l'enceinte de travail **3.**

Comme cela est représenté sur la **figure 1****,** la vis de pressage **6** présente avantageusement une forme sensiblement ogivale et elle comporte sur sa surface externe des filets **61** conformés pour entraîner et écraser en rotation les aliments à presser introduits depuis l'ouverture d'admission d'aliments **4.**

Pour réaliser le pressage des aliments en collaboration avec la vis de pressage **6,** l'appareil **1** de l'invention comporte également un moyen de filtration **7,** formé par exemple d'un tambour **71** monté de façon coaxiale à la vis de pressage **6** à l'intérieur de l'enceinte de travail **3.** Ce moyen de filtration **7** délimite ainsi un premier compartiment **8** de l'enceinte de travail **3,** dans lequel est installée la vis de pressage **6,** et un second compartiment **9** délimité entre la paroi interne du bol **31** de l'enceinte de travail **3** et la paroi externe du tambour **71** de filtration. Cette séparation de l'espace interne de l'enceinte de travail **3** en un premier compartiment **8** et un second compartiment **9** et la collaboration de la vis de pressage **6** et du moyen de filtration **7** dans l'action de pressage des aliments permet de réaliser la séparation des jus et des résidus « solides » des aliments pressés.

De façon préférée, le tambour **71** comporte dans ces parois des bandes **72, 73** percés de pores de filtration au travers desquelles le jus des aliments pressés peut s'écouler. De plus, ce tambour **71** est avantageusement conçu tel que son diamètre interne soit sensiblement égal au diamètre maximal externe de la vis de pressage **6,** pris au niveau du bord de fuite de ses filets **61.**

Ainsi, on obtient un effet de pressage performant et continu des aliments à presser entre la vis de pressage **6** et le tambour **71,** ce qui permet une bonne séparation des jus et des résidus solides pressés des aliments. Lors du pressage des aliments entre la vis de pressage **6** et le tambour **71,** les jus traversent les parois latérales du tambour **71** par des orifices prévus à cet effet pour s'écouler ensuite dans le second compartiment **9** de l'enceinte de travail **3** entre le tambour **71** et les parois de l'enceinte de travail **3** vers la sortie d'évacuation **5.**

Dans le même temps, de façon caractéristique de l'appareil de l'invention, les résidus solides des aliments pressés sont quant à eux évacués par le fond de l'enceinte de travail **3,** au travers d'un orifice d'évacuation **10** formé par exemple dans la paroi inférieure du tambour de filtration **71.** Cet orifice d'évacuation **10** communique directement avec un canal de recirculation **11** des résidus depuis la partie inférieure **13** de l'enceinte de travail **3,** à la base de la vis de pressage **6** jusqu'au dessus de l'enceinte de travail **3,** au niveau de l'extrémité supérieure de la vis de pressage **6.**

En pratique dans l'exemple représenté, le canal de recirculation **11** débouche par un orifice de réintroduction **12** dans le premier compartiment **8** de l'enceinte de travail **3,** au niveau de la partie supérieure **14** dudit compartiment interne et de la vis de pressage **6.**

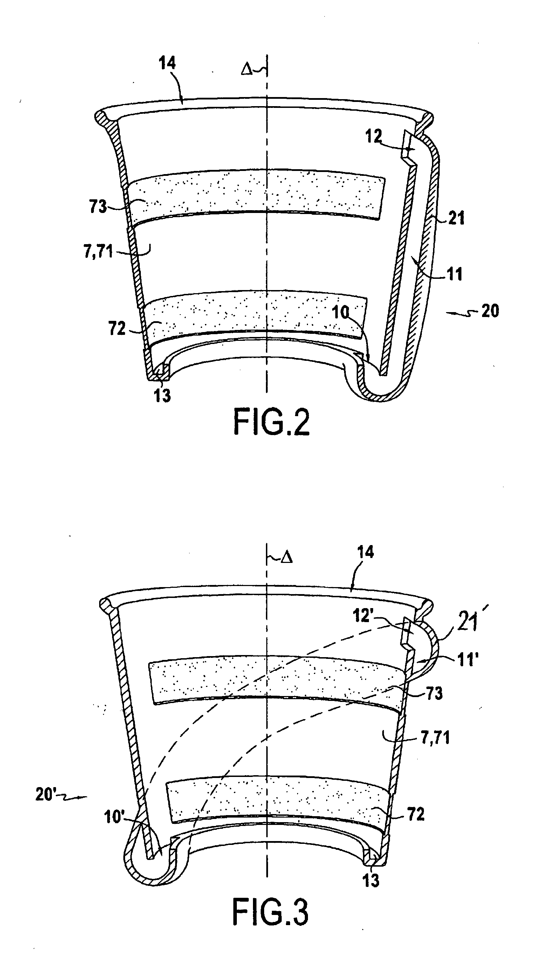

De façon avantageuse, l'orifice de réintroduction **12** peut être formé comme représenté sur les **figures 1** et **2** dans la paroi supérieure du moyen de filtration **7,** et de préférence dans une zone située approximativement sous l'ouverture d'admission d'aliments **4** dans l'enceinte de travail **3,** de sorte que les aliments à presser introduits par l'ouverture d'admission d'aliments **4** entrainent avec eux les résidus solides précédemment pressés qui sont recyclés depuis la partie inférieure **13** de l'enceinte de travail **3** et ressortent par l'orifice de réintroduction **12** pour être à nouveau pressés, en mélange avec les nouveaux aliments introduits.

Ainsi, l'appareil **1** de la présente invention possède des moyens de recirculation des résidus de pressage **20** depuis la partie inférieure **13** du premier compartiment **8** de l'enceinte de travail **3** vers la partie supérieure **14** dudit premier compartiment **8** de l'enceinte de travail **3.** Ces moyens de recirculation des résidus de pressage **20** permettent de réalimenter en continu la vis de pressage **6.** Les résidus solides d'un premier pressage sont donc pressés à nouveau plusieurs fois de façon successive tant que l'appareil est en fonction, ce qui permet de procéder à une extraction complète ou quasi-complète des jus contenus dans les aliments pressés.

La remontée des résidus de pressage depuis le fond du premier compartiment **8** de l'enceinte de travail **3** se fait à débit sensiblement constant du fait que la vis de pressage **6** éjecte lesdits résidus lentement par l'orifice d'évacuation **10** et avec une certaine pression suffisante pour faire remonter lesdits résidus de pressage dans le canal de recirculation **11** vers l'orifice de réintroduction en partie supérieure **14** du compartiment **8.**

Par l'adoption d'une telle configuration de recirculation des résidus de pressage, les inventeurs ont pu constater une amélioration très importante du rendement de pressage des aliments, de plus de 10 points de rendement supérieur au rendement des meilleures centrifugeuses et autres appareils automatisés de pressage.

A titre d'exemple, les inventeurs ont réalisé un essai de pressage d'une masse d'1kg de carottes crues sans arrêter de réalimenter en pulpe, et ce, jusqu'à ce qu'il n'y ait plus de jus qui sorte. Le rendement de pressage constaté à l'issue de cet essai a été de 78%, soit 780gr de jus, tout en sachant qu'il y a en moyenne, pour 100g de carotte crue, 89g d'eau. L'essai réalisé démontre donc parfaitement les performances de l'appareil de l'invention en matière de rendement de pressage, avec une extraction presque complète dans le cas de l'essai réalisé.

De plus au cours de cet essai, aucun effet de bourrage ou de blocage lié à la recirculation des résidus de pressage n'a été constaté. Il reste bien entendu à la fin du pressage un déchet sec qui se situe entre la vis de pressage **6** et le tambour de filtration **71,** déchet qu'il est d'ailleurs possible de faire remonter en partie supérieure **14** du premier compartiment **8** de l'enceinte de travail **3** en changeant le sens de rotation de la vis de pressage **6.**

Conformément, à la présente invention, le canal de recirculation **11** peut être réalisée de différentes manières et différentes formes.

Selon une première forme préférée représentée sur les **figures 1** et **2****,** le canal de recirculation **11,** l'orifice d'évacuation **10** et l'orifice de réintroduction **12** peuvent être formés solidaires du moyen de filtration **7,** le canal de recirculation **11** étant réalisé sous la forme d'un conduit vertical sur la paroi externe du moyen de filtration **7.**

Dans une variante de réalisation non représentée, le canal de recirculation **11** des résidus de pressage peut également être formé dans le second compartiment **9** dans l'enceinte de travail **3,** par exemple directement dans la matière d'une paroi de l'enceinte de travail **3** ou encore par un conduit simple rapporté ou simplement disposé dans le second compartiment.

Dans une autre variante de réalisation également non représentée, le canal de recirculation **11** des résidus de pressage peut également être formé sur la paroi externe de l'enceinte de travail **3.**

Dans chacune des variantes évoquées précédemment, le canal de recirculation **11** peut présenter, de façon avantageuse et comme représenté sur la **figure 2****,** une forme droite allongée selon une droite parallèle à une génératrice du moyen de filtration **7** et/ou de l'enceinte de travail **3.**

En variante, comme représenté sur la **figure 3****,** les moyens de recirculation **20'** peuvent comprendre un canal de recirculation sensiblement hélicoïdal **11'** reliant l'orifice d'évacuation **10'** à l'orifice de réintroduction **12',** sans que cela ne perturbe nécessairement le fonctionnement de l'appareil.

En effet, les inventeurs ont constaté que, s'il convenait d'éviter un canal de recirculation **11, 11'** de forme aléatoire, ou à tout le moins munie d'angles ou de boucles, et pour cette raison qu'un conduit droit pouvait être privilégié, il convenait également que sur toute sa longueur, le canal de recirculation **11, 11'** comporte une section transversale sensiblement constante. Cette constance de section, couplée à une forme simple (droite ou hélicoïdale) du canal de recirculation **11, 11'** permet de ne pas avoir de variation de section qui pourrait créer une perte de poussée des résidus remontant ou à l'inverse un blocage-bourrage desdits résidus.

Conformément à une autre caractéristique préférée de l'appareil de l'invention, le canal de recirculation **11, 11'** des résidus de pressage peut également être pourvu d'une paroi filtrante **21, 21'** communiquant avec le second compartiment, et qui permet ainsi de récupérer toute partie du jus qui serait pressée par l'effet de recirculation des résidus dans le canal de recirculation **11, 11'.**

L'utilisation de l'appareil **1** de l'invention, teol que représenté sur la **figure 1****,** s'avère extrêmement simple pour l'utilisateur. Il suffit de mettre en marche dans un premier temps l'appareil **1,** en actionnant par exemple un interrupteur **1** de commande du moteur électrique de l'appareil situé sur le boîtier **2.** Puis, l'utilisateur insère les aliments à presser, entiers ou en morceaux, dans la goulotte **16** et les pousse vers l'intérieur de l'enceinte de travail **3** à l'aide du poussoir **P.**

Les aliments tombent ensuite dans le premier compartiment **8** de l'enceinte de travail **3** et sont entraînés par les filets **61** de la vis de pressage **6** qui les écrase et les presse contre la paroi interne du tambour de filtration **71.** Par ce pressage le jus des aliments traverse les pores du tambour **71** et s'écoule via le second compartiment **9** vers la sortie d'évacuation **5** de l'enceinte de travail **3,** sous laquelle l'utilisateur peut les récupérer dans un verre puis consommer son jus frais.

Dans le même temps, au fur et à mesure du pressage, les résidus des aliments pressés sont évacués par l'orifice **10** au fond du premier compartiment de travail **3** et sont poussés par l'effet de rotation de la vis de pressage **6** à l'intérieur du canal de recirculation **11** vers l'orifice de réintroduction **12** situé en partie supérieure **14** du premier compartiment **8,** où les résidus sont alors reversés dans le premier compartiment **8** au niveau de l'extrémité supérieure de la vis de pressage **6.**

Les résidus réintroduits sont ensuite à nouveau entrainés par la vis de pressage 6, le cas échéant en mélange avec de nouveaux aliments non encore pressés et introduits par l'ouverture d'admission **4** et poussés par le poussoir **P.** Il se produit alors un nouveau cycle de pressage des résidus préalablement pressés, ainsi qu'un premier cycle de pressage des nouveau aliments, et ainsi de suite jusqu'à ce que plus aucun jus ne s'écoule vers la sortie d'évacuation **5** des jus.

L'appareil électroménager de pressage de la présente invention procure ainsi la faculté et l'avantage pour les utilisateurs de permettre un pressage efficace et en continu d'aliments, notamment de fruits et légumes, et garantissant une extraction maximale des jus des aliments pressés.

L'invention n'est pas limitée aux exemples décrits et représentés car diverses modifications peuvent y être apportées sans sortir de son cadre.

## Revendications

1. Appareil électroménager (**1**) de préparation de jus par pressage d'aliments, notamment de végétaux tels que des fruits ou des légumes, comportant :
- un boîtier (**2**) renfermant un moteur électrique d'entraînement,
- une enceinte de travail (**3**) adaptée pour être installée sur le boîtier et comportant une ouverture d'admission (**4**) d'aliments à l'intérieur de l'enceinte de travail (**3**) et une sortie d'évacuation (**5**) pour le jus,
- une vis de pressage (**6**) montée à l'intérieur de l'enceinte de travail (**3**) et accouplée mécaniquement à un arbre d'entraînement (**M**) du moteur électrique, et
- un moyen de filtration (**7**), divisant l'enceinte de travail (**3**) en un premier compartiment (**8**) logeant la vis de pressage (**6**) et en un second compartiment (**9**) communiquant avec la sortie d'évacuation (**5**),
**caractérisé en ce qu'**il comporte en outre des moyens d'évacuation et de recirculation des résidus de pressage (**20, 20'**) depuis une partie inférieure (**13**) du premier compartiment (**8**) de l'enceinte de travail (**3**) vers une partie supérieure (**14**) dudit premier compartiment (**8**).

2. Appareil électroménager selon la revendication 1, **caractérisé en ce que** le moyen de filtration (**7**) est monté coaxialement à la vis de pressage (**6**) à l'intérieur de l'enceinte de travail (**3**).

3. Appareil électroménager selon la revendication 1 ou 2, **caractérisé en ce que** les moyens d'évacuation et de recirculation des résidus de pressage (**20, 20'**) comportent un canal de recirculation (**11, 11'**) depuis un orifice d'évacuation (**10, 10'**) formé dans la partie inférieure (**13**) du premier compartiment (**8**) vers un orifice de réintroduction (**12, 12'**) formé au niveau de la partie supérieure (**14**) du premier compartiment (**8**).

4. Appareil électroménager selon la revendication 3, **caractérisé en ce que** l'orifice d'évacuation (**10, 10'**) est formé dans le fond du premier compartiment (**8**).

5. Appareil électroménager selon la revendication 3 ou 4, **caractérisé en ce que** l'orifice de réintroduction (**12, 12'**) est localisé sensiblement au niveau de l'extrémité supérieure de la vis de pressage (**6**).

6. Appareil électroménager selon l'une des revendications 3 à 5, **caractérisé en ce que** le canal de recirculation (**11, 11'**), l'orifice d'évacuation (**10, 10'**) et l'orifice de réintroduction (**12, 12'**) sont formés solidaires du moyen de filtration (**7**).

7. Appareil électroménager selon l'une des revendications 3 à 6, **caractérisé en ce que** le canal de recirculation (**11, 11'**) est formé dans le second compartiment (**9**).

8. Appareil électroménager selon l'une des revendications 3 à 6, caractérisé en ce le canal de recirculation (**11, 11'**) est formé sur une paroi externe de l'enceinte de travail (**3**).

9. Appareil électroménager selon l'une des revendications 3 à 8, **caractérisé en ce que** le canal de recirculation (**11**) présente une forme droite allongée selon une droite parallèle à une génératrice du moyen de filtration (**7**) et/ou de l'enceinte de travail (**3**).

10. Appareil électroménager selon l'une des revendications 3' à 8, **caractérisé en ce que** le canal de recirculation (**11'**) présente une forme sensiblement hélicoïdale.

11. Appareil électroménager selon l'une des revendications 3 à 10, **caractérisé en ce que** le canal de recirculation (**11, 11'**) présente une paroi filtrante (**21, 21'**) communiquant avec le second compartiment (**9**).

12. Appareil électroménager selon l'une des revendications 3 à 11, **caractérisé en ce que** la section transversale du canal de recirculation (**11, 11'**) est constante entre ledit orifice d'évacuation (**10, 10'**) et ledit orifice de réintroduction (**12, 12'**).

13. Appareil électroménager selon l'une des revendications 3 à 12, **caractérisé en ce que** l'orifice de réintroduction (**12, 12'**) est situé en partie haute du moyen de filtration (**7**) et sous l'ouverture d'admission (**4**) de l'enceinte de travail (**3**).

14. Appareil électroménager selon l'une des revendication 1 à 13, **caractérisé en ce que** la sortie d'évacuation (**5**) comporte un robinet de distribution (**R**) du jus.

15. Appareil électroménager selon la revendication 14, **caractérisé en ce que** le robinet de distribution (**R**) comporte un moyen anti-goutte.

## Patentansprüche

1. Elektrisches Haushaltsgerät (1) zur Zubereitung von Saft durch Auspressen von Nahrungsmitteln, insbesondere von Pflanzen, wie Obst oder Gemüse, umfassend:
- ein Gehäuse (2), das einen elektrischen Antriebsmotor enthält,
- einen Arbeitsbehälter (3), der dafür ausgelegt ist, auf dem Gehäuse angebracht zu werden, und der eine Öffnung zum Zuführen (4) von Nahrungsmitteln in den Arbeitsbehälter (3) sowie einen Ablaßausgang (5) für den Saft umfaßt,
- eine Preßschnecke (6), die in dem Arbeitsbehälter (3) angebracht ist und mit einer Antriebswelle (M) des Elektromotors mechanisch gekoppelt ist, und
- ein Filtermittel (7), das den Arbeitsbehälter (3) in einen ersten Raum (8), in dem die Preßschnecke (6) aufgenommen ist, und in einen zweiten Raum (9), der mit dem Ablaßausgang (5) verbunden ist, unterteilt,
**dadurch gekennzeichnet, daß** es ferner Mittel zum Abführen und Rückführen der Preßrückstände (20, 20') von einem unteren Teil (13) des ersten Raums (8) des Arbeitsbehälters (3) zu einem oberen Teil (14) des ersten Raums (8) umfaßt.

2. Elektrisches Haushaltsgerät nach Anspruch 1, **dadurch gekennzeichnet, daß** das Filtermittel (7) koaxial zu der Preßschnecke (6) innerhalb des Arbeitsbehälters (3) angebracht ist.

3. Elektrisches Haushaltsgerät nach Anspruch 1 oder 2, **dadurch gekennzeichnet, daß** die Mittel zum Abführen und Rückführen der Preßrückstände (20, 20') einen Rückführkanal (11, 11') von einer Abführöffnung (10, 10'), die im unteren Teil (13) des ersten Raums (8) ausgebildet ist, zu einer Wiedereinführöffnung (12, 12`), die im Bereich des oberen Teils (14) des ersten Raums (8) ausgebildet ist, umfassen.

4. Elektrisches Haushaltsgerät nach Anspruch 3, **dadurch gekennzeichnet, daß** die Abführöffnung (10, 10`) im Boden des ersten Raums (8) ausgebildet ist.

5. Elektrisches Haushaltsgerät nach Anspruch 3 oder 4, **dadurch gekennzeichnet, daß** die Wiedereinführöffnung (12, 12') im wesentlichen im Bereich des oberen Endes der Preßschnecke (6) gelegen ist.

6. Elektrisches Haushaltsgerät nach einem der Ansprüche 3 bis 5, **dadurch gekennzeichnet, daß** der Rückführkanal (11, 11'), die Abführöffnung (10, 10') und die Wiedereinführöffnung (12, 12') mit dem Filtermittel (7) fest verbunden ausgebildet sind.

7. Elektrisches Haushaltsgerät nach einem der Ansprüche 3 bis 6, **dadurch gekennzeichnet, daß** der Rückführkanal (11, 11') in dem zweiten Raum (9) ausgebildet ist.

8. Elektrisches Haushaltsgerät nach einem der Ansprüche 3 bis 6, **dadurch gekennzeichnet, daß** der Rückführkanal (11, 11`) an einer Außenwand des Arbeitsbehälters (3) ausgebildet ist.

9. Elektrisches Haushaltsgerät nach einem der Ansprüche 3 bis 8, **dadurch gekennzeichnet, daß** der Rückführkanal (11) eine gerade, langgestreckte Form entlang einer zu einer Mantellinie des Filtermittels (7) und/oder des Arbeitsbehälters (3) parallel verlaufenden Geraden aufweist.

10. Elektrisches Haushaltsgerät nach einem der Ansprüche 3 bis 8, **dadurch gekennzeichnet, daß** der Rückführkanal (11') im wesentlichen schraubenförmig ausgebildet ist.

11. Elektrisches Haushaltsgerät nach einem der Ansprüche 3 bis 10, **dadurch gekennzeichnet, daß** der Rückführkanal (11, 11') eine mit dem zweiten Raum (9) verbundene Filterwand (21, 21') aufweist.

12. Elektrisches Haushaltsgerät nach einem der Ansprüche 3 bis 11, **dadurch gekennzeichnet, daß** der Querschnitt des Rückführkanals (11, 11') zwischen der Abführöffnung (10, 10') und der Wiedereinführöffnung (12, 12') konstant ist.

13. Elektrisches Haushaltsgerät nach einem der Ansprüche 3 bis 12, **dadurch gekennzeichnet, daß** die Wiedereinführöffnung (12, 12') im oberen Teil des Filtermittels (7) und unter der Zuführöffnung (4) des Arbeitsbehälters (3) gelegen ist.

14. Elektrisches Haushaltsgerät nach einem der Ansprüche 1 bis 13, **dadurch gekennzeichnet, daß** der Ablaßausgang (5) einen Hahn zur Abgabe (R) des Saftes umfaßt.

15. Elektrisches Haushaltsgerät nach Anspruch 14, **dadurch gekennzeichnet, daß** der Abgabehahn (R) ein Antitropfmittel umfaßt.

## Claims

1. A home appliance (1) for preparation of juice by pressing food, especially vegetables such as fruits or legumes, comprising:
- a housing (2) enclosing an electric drive motor,
- a work chamber (3) adapted to be installed on the housing and comprising an admission opening (4) for food inside the work chamber (3) and a discharge outlet (5) for the juice,
- a pressing screw (6) mounted inside the work chamber (3) and connected mechanically to a drive shaft (M) of the electric motor, and
- filtration means (7) dividing the work chamber (3) into a first compartment (8) housing the pressing screw (6) and a second compartment (9) communicating with the discharge outlet (5),
**characterised in that** it further comprises discharge and recirculation means of the dressing residue (20, 20') from a lower part (13) of the first compartment (8) of the work chamber (3) to an upper part (14) of said first compartment (8).

2. The home appliance as claimed in Claim 1, **characterised in that** the filtration means (7) are mounted coaxially to the pressing screw (6) inside the work chamber (3).

3. The home appliance as claimed in Claim 1 or 2, **characterised in that** the discharge and recirculation means for dressing residue (20, 20') comprise a recirculation channel (11, 11') from a discharge orifice (10, 10') formed in the lower part (13) of the first compartment (8) to a reintroduction orifice (12, 12') formed at the level of the upper part (14) of the first compartment (8).

4. The home appliance as claimed in Claim 3, **characterised in that** the discharge orifice (10, 10') is formed in the base of the first compartment (8).

5. The home appliance as claimed in Claim 3 or 4, **characterised in that** the réintroduction orifice (12, 12') is located substantially at the level of the upper end of the pressing screw (6).

6. The home appliance as claimed in any one of Claims 3 to 5, **characterised in that** the recirculation channel (11, 11'), the discharge orifice (10, 10') and the reintroduction orifice (12, 12') are formed attached to the filtration means (7).

7. The home appliance as claimed in any one of Claims 3 to 6, **characterised in that** the recirculation channel (11, 11') is formed in the second compartment (9).

8. The home appliance as claimed in any one of Claims 3 to 6, **characterised in that** the recirculation channel (11, 11') is formed on an external wall of the work chamber (3).

9. The home appliance as claimed in any one of Claims 3 to 8, **characterised in that** the recirculation channel (11) has a straight form elongated in a straight line parallel to a generatrix of the filtration means (7) and/or of the work chamber (3).

10. The home appliance as claimed in any one of Claims 3 to 8, **characterised in that** the recirculation channel (11') has a substantially helicoidal form.

11. The home appliance as claimed in any one of Claims 3 to 10, **characterised in that** the recirculation channel (11, 11') has a filtering wall (21, 21') communicating with the second compartment (9).

12. The home appliance as claimed in any one of Claims 3 to 11, **characterised in that** the transversal cross-section of the recirculation channel (11, 11') is constant between said discharge orifice (10, 10') and said reintroduction orifice (12, 12').

13. The home appliance as claimed in any one of Claims 3 to 12, **characterised in that** the reintroduction orifice (12, 12') is situated in an upper part of the filtration means (7) and under the admission opening (4) of the work chamber (3).

14. The home appliance as claimed in any one of Claims 1 to 13, **characterised in that** the discharge outlet (5) comprises a distribution tap (R) of the juice.

15. The home appliance as claimed in Claim 14, **characterised in that** the distribution tap (R) comprises anti-drip means.
